# EUROPEAN PATENT APPLICATION

(11) **EP 4 715 621 A1**
(43) Date of publication of application: **25.03.2026**
(21) Application number: 24829947.1
(22) Date of filing: 08.03.2024
(51) Int. Cl.: G06F 16/22

(54) **METADATA PROCESSING METHOD AND SYSTEM, AND COMPUTING DEVICE**

(30) Priority: 29.06.2023 CN 202310786187
(71) Applicant: Huawei Cloud Computing Technologies Co., Ltd., Guiyang, Guizhou, 550025 (CN)
(72) Inventor: ZHONG, Yanhui, Guiyang, Guizhou 550025 (CN); ZENG, Kai, Guiyang, Guizhou 550025 (CN); LV, Jinquan, Guiyang, Guizhou 550025 (CN); WANG, Chuanting, Guiyang, Guizhou 550025 (CN); HE, Jiajin, Guiyang, Guizhou 550025 (CN); LI, Jingjin, Guiyang, Guizhou 550025 (CN); MA, Wei, Guiyang, Guizhou 550025 (CN)
(74) Representative: Gill Jennings & Every LLP
(86) International application number: PCT/CN2024/080666
(87) International publication number: WO 2025/001294

(57) **Abstract**

A metadata processing method and system, and a computing device are provided. The method includes: A data production cluster generates metadata of shared data. The data production cluster stores the shared data and the metadata into a shared storage. The shared storage generates path information of the metadata. A data consumption cluster obtains the path information of the metadata from the shared storage, obtains the metadata from the shared storage based on the path information of the metadata, and obtains the shared data from the shared storage based on the metadata. According to the method, storage costs of the metadata of the shared data can be reduced.

## Description

This application claims priority to Chinese Patent Application No. 202310786187.1, filed with the China National Intellectual Property Administration on June 29, 2023 and entitled "METADATA PROCESSING METHOD AND SYSTEM, AND COMPUTING DEVICE", which is incorporated herein by reference in its entirety.

### TECHNICAL FIELD

This application relates to the field of data storage, and more specifically, to a metadata processing method and system, and a computing device.

### BACKGROUND

A data warehouse is used as a carrier for data storage and analysis. Currently, major cloud vendors have launched data warehouse services. Data sharing becomes an attribute of a data warehouse service, and aims to eliminate data silos, implement data transaction and sharing between users, and implement data exchange and sharing between users. Data sharing means that a data producer provides shared data, and a data consumer subscribes to or purchases some shared data produced by the data producer. After the data consumer purchases the shared data, the data consumer may obtain the shared data, and perform data analysis and calculation on the shared data.

In a process in which the data producer produces and stores the shared data, metadata of the shared data is also generated and stored. When the data consumer is to obtain the shared data from a shared storage, the data consumer needs to obtain the shared data from the shared storage based on the metadata of the shared data. In a related conventional technical solution, metadata of shared data is separately stored in a metadata cluster. Because the metadata cluster is an independent cluster configured to store metadata, storage costs of the metadata cluster are high.

Therefore, how to reduce storage costs of metadata of shared data becomes a technical problem that needs to be urgently resolved.

### SUMMARY

This application provides a metadata processing method and system, and a computing device. According to the method, storage costs of metadata of shared data can be reduced.

According to a first aspect, a metadata processing method is provided. The method includes: A data production cluster generates metadata of shared data, where the data production cluster includes a plurality of data nodes that provide the shared data. The data production cluster stores the shared data and the metadata into a shared storage, where the metadata is used by a data consumption cluster to obtain the shared data from the shared storage, and the data consumption cluster includes a plurality of data nodes that use the shared data. The shared storage generates path information of the metadata. The data consumption cluster obtains the path information of the metadata from the shared storage. The data consumption cluster obtains the metadata from the shared storage based on the path information of the metadata. The data consumption cluster obtains the shared data from the shared storage based on the metadata.

In the foregoing technical solution, the shared storage storing the shared data is reused, and the metadata of the shared data is stored in the shared storage. In this way, there is no need to introduce an independent cluster to store the metadata, so that storage costs of the metadata of the shared data can be reduced, and data sharing of a large scale can be further performed between a plurality of clusters.

With reference to the first aspect, in some implementations of the first aspect, the method further includes: The data production cluster sets access permission for the path information of the metadata. The data consumption cluster obtains the path information of the metadata by using the access permission.

In the foregoing technical solution, the data production cluster sets the access permission for the path information of the metadata, so that only a data consumption cluster having the access permission can obtain the path information of the metadata.

With reference to the first aspect, in some implementations of the first aspect, the data consumption cluster periodically obtains the path information of the metadata from the shared storage; or the data consumption cluster obtains the path information of the metadata from the shared storage when a target event occurs.

With reference to the first aspect, in some implementations of the first aspect, the plurality of data nodes in the data production cluster store metadata of respective shared data into the shared storage.

With reference to the first aspect, in some implementations of the first aspect, the method further includes: After the data consumption cluster reads the shared data, the shared storage deletes the shared data or the metadata of the shared data.

In the foregoing technical solution, after the data consumption cluster reads the shared data, the data production cluster deletes the shared data or the metadata of the shared data from the shared storage. In this way, garbage collection is performed on the shared data or the metadata of the shared data that has been used by the data consumption cluster, and storage space of the shared storage is further saved.

According to a second aspect, a metadata processing system is provided. The system includes a data production cluster, a shared storage, and a data consumption cluster. The data production cluster is configured to generate metadata of shared data, where the data production cluster includes a plurality of data nodes that provide the shared data. The data production cluster is further configured to store the shared data and the metadata into the shared storage, where the metadata is used by the data consumption cluster to obtain the shared data from the shared storage, and the data consumption cluster includes a plurality of data nodes that use the shared data. The shared storage is configured to generate path information of the metadata. The data consumption cluster is configured to obtain the path information of the metadata from the shared storage. The data consumption cluster is further configured to obtain the metadata from the shared storage based on the path information of the metadata. The data consumption cluster is further configured to obtain the shared data from the shared storage based on the metadata.

With reference to the second aspect, in some implementations of the second aspect, the data production cluster is further configured to set access permission for the path information of the metadata. The data consumption cluster is further configured to obtain the path information of the metadata by using the access permission.

With reference to the second aspect, in some implementations of the second aspect, the data consumption cluster is specifically configured to: periodically obtain the path information of the metadata from the shared storage; or obtain the path information of the metadata from the shared storage when a target event occurs.

With reference to the second aspect, in some implementations of the second aspect, the data production cluster is specifically configured to: store, by the plurality of data nodes in the data production cluster, metadata of respective shared data into the shared storage.

With reference to the second aspect, in some implementations of the second aspect, the shared storage is further configured to: after the data consumption cluster reads the shared data, delete the shared data or the metadata of the shared data.

It should be noted that for beneficial effects in the second aspect, reference is made to beneficial effects in the first aspect. Details are not described herein again.

According to a third aspect, a computing device cluster is provided, and includes at least one computing device. Each computing device includes a processor and a storage. The processor of the at least one computing device is configured to execute instructions stored in the storage of the at least one computing device, to enable the computing device cluster to perform the method according to any one of the first aspect or the possible implementations of the first aspect.

Optionally, the processor may be a general-purpose processor, and may be implemented by hardware or software. When the processor is implemented by hardware, the processor may be a logic circuit, an integrated circuit, or the like. When the processor is implemented by software, the processor may be a general-purpose processor, and is implemented by reading software code stored in the storage. The storage may be integrated into the processor, or may be located outside the processor and exist independently.

According to a fourth aspect, a computer program product including instructions is provided. When the instructions are run by a computing device cluster, the computing device cluster is enabled to perform the method according to any one of the first aspect or the implementations of the first aspect.

According to a fifth aspect, a computer-readable storage medium is provided, and includes computer program instructions. When the computer program instructions are executed by a computing device cluster, the computing device cluster performs the method according to any one of the first aspect or the implementations of the first aspect.

In an example, the computer-readable storage medium includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

Optionally, in an implementation, the foregoing storage medium may be specifically a non-volatile storage medium.

### BRIEF DESCRIPTION OF DRAWINGS

FIG. 1 is a block diagram of a data sharing service provided by a data warehouse;
FIG. 2 is a block diagram of a cloud scenario to which an embodiment of this application is applicable;
FIG. 3 is a schematic flowchart of a metadata processing method according to an embodiment of this application;
FIG. 4 is a schematic flowchart of a method for storing metadata of shared data by a data production cluster according to an embodiment of this application;
FIG. 5 is a block diagram of a data production cluster according to an embodiment of this application;
FIG. 6 is an example of a correspondence between a data node and a data shard (shard) in a data production cluster according to an embodiment of this application;
FIG. 7 is a block diagram of data segments and metadata that correspond to shardl of table1 of shared data according to an example of this application;
FIG. 8 is a diagram of information recorded in a manifest1 file according to an embodiment of this application;
FIG. 9 is a schematic flowchart of another method for storing metadata of shared data by a data production cluster according to an embodiment of this application;
FIG. 10 is a block diagram of newly-added shared data of a data production cluster and metadata corresponding to the shared data according to an embodiment of this application;
FIG. 11 is a diagram of information recorded in a manifest2 file according to an embodiment of this application;
FIG. 12 is a schematic flowchart of a method for obtaining metadata and shared data corresponding to the metadata from a shared storage by a data consumption cluster according to an embodiment of this application;
FIG. 13 is a schematic flowchart of another method for obtaining metadata and shared data corresponding to the metadata from a shared storage by a data consumption cluster according to an embodiment of this application;
FIG. 14 is a block diagram of a metadata processing system 1400 according to an embodiment of this application;
FIG. 15 is a diagram of an architecture of a computing device 1500 according to an embodiment of this application;
FIG. 16 is a diagram of an architecture of a computing device cluster according to an embodiment of this application; and
FIG. 17 is a diagram in which computing devices 1500A and 1500B are connected via a network according to an embodiment of this application.

### DESCRIPTION OF EMBODIMENTS

The following describes technical solutions of this application with reference to accompanying drawings.

Each aspect, embodiment, or feature is presented in this application with reference to a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the terms such as "example" or "for example" are for representing giving an example, an illustration, or a description. Any embodiment or design scheme described as an "example" in this application should not be explained as being more preferred or having more advantages than another embodiment or design scheme. Exactly, the term "example" is for presenting a concept in a specific manner.

In embodiments of this application, "relevant (corresponding, relevant)" and "corresponding (corresponding)" may sometimes be mixed. It should be noted that meanings to be expressed by the two are consistent when a difference between them is not emphasized.

A service scenario described in embodiments of this application is intended to describe the technical solutions in embodiments of this application more clearly, and does not constitute a limitation on the technical solutions provided in embodiments of this application. A person of ordinary skill in the art may learn that, with evolution of network architectures and emergence of new service scenarios, the technical solutions provided in embodiments of this application are also applicable to a similar technical problem.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in some further embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In this application, at least one means one or more, and a plurality of means two or more. The term "and/or" describes an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

A data warehouse is used as a carrier for data storage and analysis. Currently, major cloud vendors have launched data warehouse services. Data sharing becomes an attribute of a data warehouse service, and aims to eliminate data silos, implement data transaction and sharing between users, and implement data exchange and sharing between users.

It should be understood that a data sharing service provided by the data warehouse means that a data producer provides shared data, and a data consumer subscribes to or purchases some shared data produced by the data producer. After the data consumer purchases the shared data, the data consumer may obtain the shared data, and perform data analysis and calculation on the shared data.

In an example, the shared data may include but is not limited to: a table, a materialized view, some column data in a table, or some row data in a table produced by the data producer.

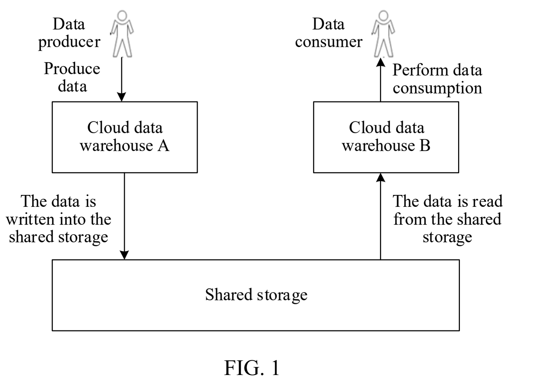

For ease of understanding, a basic principle of a data sharing service provided by a data warehouse is described below in detail with reference to FIG. 1.

As shown in FIG. 1, a data producer continuously produces data in a cloud data warehouse and writes the produced data into a shared storage. The data producer can also authorize, based on data subscription or purchase of a data consumer, the data consumer to read a specific part of data stored in the shared storage. The data consumer can read the purchased or subscribed part of data from the shared storage, perform data analysis and calculation on the part of data, and perform a process of data consumption.

It should be understood that data stored in the shared storage may be referred to as shared data.

Specifically, in the foregoing process in which the data producer produces and stores the shared data, metadata of the shared data is also generated and stored. When the data consumer is to obtain the shared data from the shared storage, the data consumer needs to obtain the shared data from the shared storage based on the metadata of the shared data.

It should be understood that the metadata of the shared data is used for describing the shared data, and is information that describes an attribute of the shared data. For example, the metadata of the shared data may include but is not limited to information such as a location and an address of the shared data stored in the shared storage.

In a related conventional technical solution, metadata of shared data is separately stored in a metadata cluster (that is, a metadata cluster). Because the metadata cluster is an independent cluster configured to store metadata, storage costs of the metadata cluster are high.

In view of this, an embodiment of this application provides a metadata processing method. According to the method, storage costs of metadata of shared data can be reduced, and large-scale and multi-cluster data sharing can be further performed.

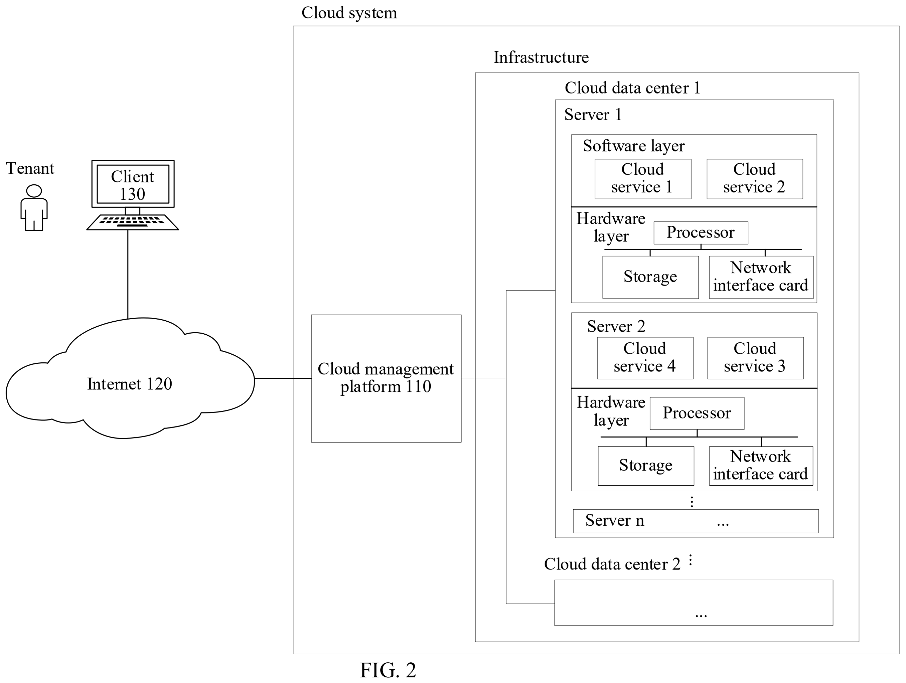

In a possible implementation, the method provided in this embodiment of this application may be applied to a cloud service scenario, and a cloud management platform in the cloud service scenario performs the method. For ease of description, the cloud service scenario is first described below in detail with reference to FIG. 2.

FIG. 2 is a block diagram of a cloud scenario to which an embodiment of this application is applicable. As shown in FIG. 2, the cloud scenario may include a cloud management platform 110, an Internet 120, and a client 130.

As shown in FIG. 2, the cloud management platform 110 is configured to manage an infrastructure that provides a plurality of cloud services. The infrastructure includes a plurality of cloud data centers, each cloud data center includes a plurality of servers, and each server includes a cloud service resource to provide a corresponding cloud service for a tenant.

The cloud management platform 110 may be located in the cloud data center, and may provide an access interface (for example, an interface or an application programming interface (application programming interface, API)). The tenant may operate the client 130 to remotely access the access interface, to register a cloud account and a password on the cloud management platform 110 and log in to the cloud management platform 110. After the cloud management platform 110 successfully authenticates the cloud account and the password, the tenant may further pay on the cloud management platform 110 to select and purchase a virtual machine with a specific specification (a processor, a memory, or a disk). After the payment for purchase succeeds, the cloud management platform 110 provides a remote login account and password of the purchased virtual machine, and the client 130 may remotely log in to the virtual machine, and install and run an application of the tenant in the virtual machine. Therefore, the tenant may create, manage, log in to, and operate the virtual machine in the cloud data center via the cloud management platform 110. The virtual machine may also be referred to as a cloud server (elastic compute service, ECS) or an elastic instance (different cloud service providers have different names).

It should be understood that the tenant of the cloud service may be an individual, an enterprise, a school, a hospital, an administrative agency, or the like.

Functions of the cloud management platform 110 include but are not limited to a user console, a computing management service, a network management service, a storage management service, an authentication service, and an image management service. The user console provides the interface or the API to interact with the tenant. The computing management service is used for managing a bare-metal server and a server running the virtual machine and a container. The network management service is used for managing a network service (for example, a gateway and a firewall). The storage management service is used for managing a storage service (such as a data bucket service). The authentication service is used for managing the account and the password of the tenant. The image management service is used for managing a virtual machine image. The tenant may use the client 130 to log in to the cloud management platform 110 over the Internet 120 to manage a rented cloud service.

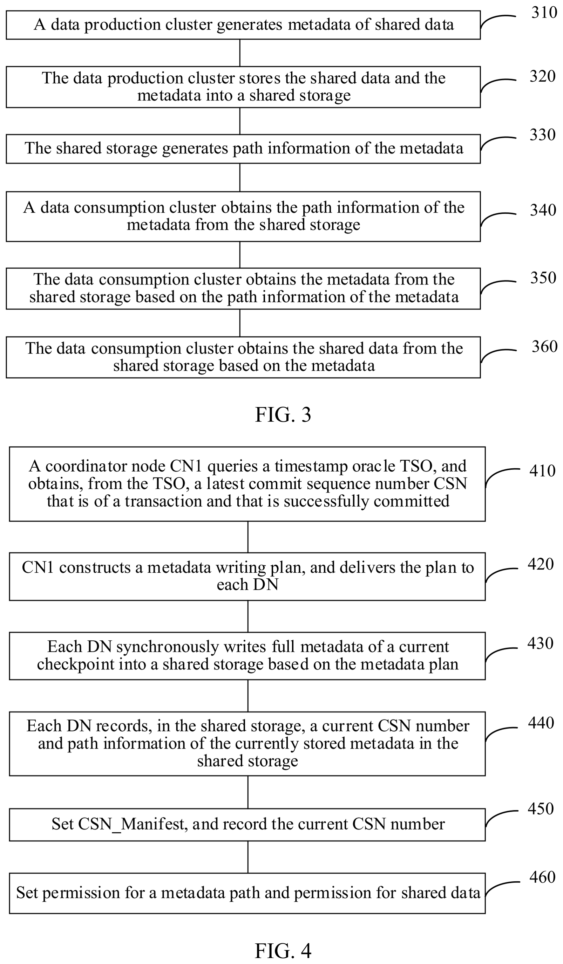

FIG. 3 is a schematic flowchart of a metadata processing method according to an embodiment of this application. As shown in FIG. 3, the method may include step 310 to step 360. Step 310 to step 360 are separately described below in detail.

Step 310: A data production cluster generates metadata of shared data.

In this embodiment of this application, after producing the shared data, the data production cluster may further generate the metadata of the shared data. For specific related descriptions of the metadata of the shared data, refer to the foregoing descriptions. Details are not described herein again.

In an example, the data production cluster may include a plurality of data nodes (data node, DN), and the plurality of data nodes are configured to produce or provide the foregoing shared data.

Step 320: The data production cluster stores the shared data and the metadata into a shared storage.

In this embodiment of this application, the data production cluster may store both the shared data and the metadata of the shared data into the shared storage. The metadata is used by a data consumption cluster to obtain the corresponding shared data from the shared storage.

For example, the data production cluster includes a plurality of data nodes. The plurality of data nodes in the data production cluster may store metadata of respective shared data into the shared storage.

There are a plurality of implementations in which the data production cluster stores the metadata into the shared storage. This is not specifically limited in embodiments of this application. In a possible implementation, the data production cluster may write the metadata of the shared data into the shared storage based on a checkpoint (checkpoint). In consideration of performance of writing the metadata and an amount of to-be-written data, a full checkpoint process and an incremental checkpoint process may be included. The full checkpoint process means that full metadata of current shared data is written into the shared storage at a checkpoint. The incremental checkpoint process means that metadata of incremental shared data is written into the shared storage at a checkpoint based on a checkpoint of a previous checkpoint. The two different manners are described below in detail with reference to specific embodiments. Details are not described herein.

It should be understood that, to ensure consistency of shared data in service logic, a data producer uniformly constructs a checkpoint (a checkpoint, which may also be understood as a snapshot at a moment) for metadata on a distributed node. Data has been written into the shared storage in a process of data generation. Therefore, metadata consistency is especially important in a process of data sharing. In a distributed system, all nodes have a unified checkpoint. At the checkpoint, data read based on metadata is consistent in service logic, and this can meet an ACID requirement of a database system. In addition, the metadata that is of the checkpoint and that is written by all nodes is in a path of the shared storage and cannot be overwritten by each other.

In an example, the foregoing shared storage may be an object storage service (object storage service, OBS) in a cloud storage, or may be another storage service, provided that a function of the shared storage can be implemented. This is not specifically limited in embodiments of this application.

In an example, the data consumption cluster may include a plurality of data nodes (data node, DN), and the plurality of data nodes are configured to use the shared data stored into the shared storage by the data production cluster.

Step 330: The shared storage generates path information of the metadata.

In this embodiment of this application, after the data production cluster stores the metadata into the shared storage, the shared storage may allocate storage space to the metadata, to generate the path information of the metadata.

In some embodiments, the data production cluster may further set access permission for the path information of the metadata, so that a data consumption cluster having the access permission can obtain the path information of the metadata by using the access permission.

Step 340: The data consumption cluster obtains the path information of the metadata from the shared storage.

In this embodiment of this application, the data consumption cluster may obtain the path information of the metadata from the shared storage. In a possible implementation, the data consumption cluster may periodically obtain the path information of the metadata from the shared storage. In another possible implementation, the data consumption cluster may alternatively obtain the path information of the metadata from the shared storage when a target event occurs.

In some embodiments, if access permission is set for the path information of the metadata, the data consumption cluster may further obtain the path information of the metadata by using the access permission.

Step 350: The data consumption cluster obtains the metadata from the shared storage based on the path information of the metadata.

In this embodiment of this application, the data consumption cluster may obtain the stored metadata from the shared storage based on the path information of the obtained metadata.

Step 360: The data consumption cluster obtains the shared data from the shared storage based on the metadata.

In this embodiment of this application, the data consumption cluster may obtain, from the shared storage based on the obtained metadata, the stored shared data corresponding to the metadata, to perform data analysis based on the obtained shared data, and perform a data consumption process.

For example, the data consumption cluster includes a plurality of data nodes. The plurality of data nodes in the data consumption cluster may obtain the shared data from the shared storage in parallel based on the metadata of the shared data, and perform data analysis based on the obtained shared data.

In some embodiments, after the data consumption cluster reads the shared data, the shared storage may further delete the shared data or delete the metadata of the shared data.

In the foregoing technical solution, the shared storage storing the shared data is reused, and the metadata of the shared data is stored in the shared storage. In this way, metadata sharing is implemented without needing to introduce an independent cluster to store the metadata, so that storage costs of the metadata of the shared data can be reduced, and data sharing of a large scale can be further performed between a plurality of clusters.

With reference to FIG. 4 to FIG. 8, an implementation in which a data production cluster stores metadata of shared data into a shared storage is described below in detail by using a full checkpoint process as an example. It should be understood that the examples in FIG. 4 to FIG. 8 are merely intended to help a person skilled in the art understand embodiments of this application, but are not intended to limit embodiments of this application to specific values or specific scenarios in the examples in FIG. 4 to FIG. 8. It is clear that a person skilled in the art can make various equivalent modifications or changes based on the following examples provided in FIG. 4 to FIG. 8, and such modifications and changes also fall within the scope of embodiments of this application.

FIG. 4 is a schematic flowchart of a method for storing metadata of shared data by a data production cluster according to an embodiment of this application. As shown in FIG. 4, the method may include step 410 to step 460. Step 410 to step 460 are separately described below in detail.

Step 410: A coordinator node 1 (coordinator node, CN1) queries a timestamp oracle (timestamp oracle, TSO), and obtains, from the TSO, a latest commit sequence number (commit sequence number, CSN) that is of a transaction and that is successfully committed.

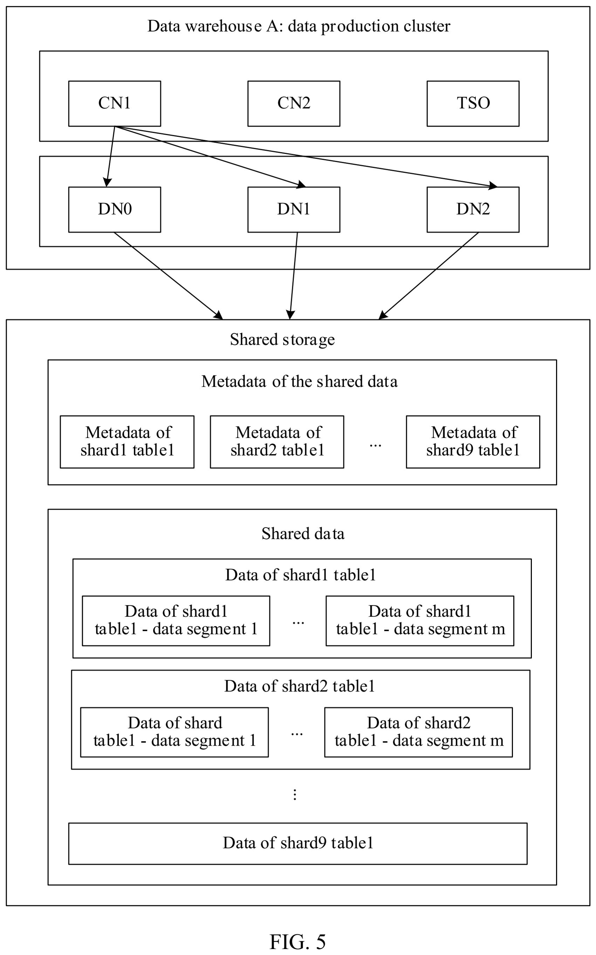

In an example, as shown in FIG. 5, the data production cluster includes a plurality of coordinator nodes (coordinator node, CN). Functions of the CN of the data production cluster may include but are not limited to transaction management, query management, permission management, access control, sharing control, and the like. For example, the CN of the data production cluster records information such as specific data (for example, a specific table, a specific materialized view, data in specific columns of a table, and data in specific rows of a table) that needs to be shared, or specific data shared to a consumption cluster of a specific tenant.

In this embodiment of this application, the data production cluster may select one CN from the plurality of CNs to perform a metadata storage process. There are a plurality of specific selection manners. This is not limited in embodiments of this application. For example, one CN may be selected, by voting, from the plurality of CNs for execution. For another example, a CN with a largest ID may be selected from the plurality of CNs for execution. For another example, a CN with a smallest ID may be selected from the plurality of CNs for execution.

It should be noted that a quantity of CNs and a quantity of DNs included in the data production cluster are not specifically limited in embodiments of this application. For ease of description, two CNs (CN1 and CN2) and three DNs (DN0, DN1, and DN2) are used as examples for description in FIG. 5.

For example, CN1 performs metadata storage. CN1 triggers a data sharing module. To ensure logical consistency, CN1 needs to interact with a TSO of a system. Specifically, the data sharing module in CN1 queries the TSO for a latest CSN that is successfully committed. For example, the latest CSN that is successfully committed is CSNO.

It should be understood that a core of a database is to sort operations of transactions. In a conventional single-server architecture, transaction sorting may be easily implemented based on a log sequence number or a transaction ID. However, in a distributed architecture, a database runs on a plurality of servers, each database instance has an independent clock or log, and there is clock skew between servers. In this case, the clocks in the distributed database cannot reflect a global transaction sequence. As one of key technologies of the distributed database, a clock synchronization technology is used to resolve a problem of a sequence of events in the distributed database. The TSO is a clock synchronization technology that provides time services and uses a central control service to allocate monotonically increasing timestamps, for example, monotonically increasing integer CSNs. The TSO ensures correct linear consistency and good performance.

Step 420: CN1 constructs a metadata writing plan (plan), and delivers the plan to each DN.

In an example, in an initial phase of a data sharing relationship, full metadata corresponding to shared data of a current checkpoint needs to be written into a shared storage. Therefore, the metadata writing plan constructed by CN1 indicates each DN to write, into the shared storage, the full metadata that is of the current checkpoint and that is stored in a memory of the DN.

For ease of description, an example in which the shared data written into the shared storage is table1 is used below for description.

Step 430: Each DN synchronously writes the full metadata of the current checkpoint into the shared storage based on the metadata plan.

It should be understood that, in a distributed system, a distribution manner of table data in each DN may include but is not limited to hash distribution, round-robin distribution, replica distribution, and the like. Corresponding data is referred to as a shard/segment/bucket/partition, and the like. Names are different in different product systems. A term used in embodiments is data shard (shard). Sharding means partitioning one piece of table data into a plurality of parts. Each DN manages and stores a part of the table data.

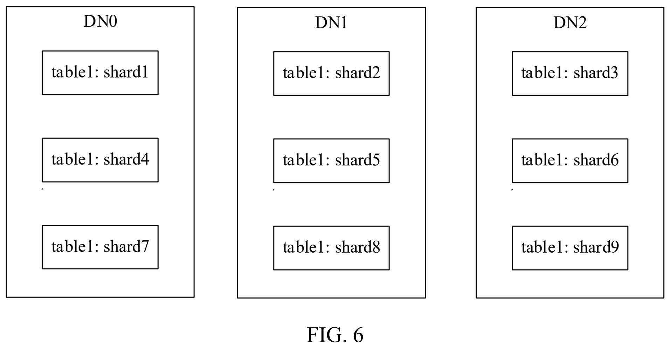

For example, as shown in FIG. 6, the shared data is tablel, and table1 is partitioned into nine shards for management: shard1 to shard9. DN0 manages and stores shard1, shard4, and shard7. DN1 manages and stores shard2, shard5, and shard8. DN2 manages and stores shard3, shard6, and shard9.

In this embodiment of this application, the CN may manage and record a correspondence between the DN and the shard. If a DN node is scaled, only a correspondence between a shard and the DN node needs to be changed. In this way, data distribution is irrelevant to a quantity of nodes.

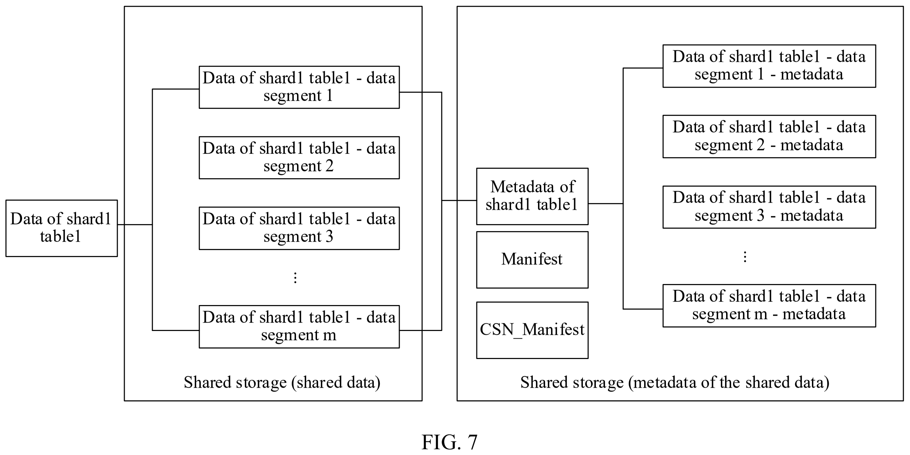

Because each shard may store a large amount of data, the data in the shard needs to be further segmented (data segments). Each DN synchronously writes a part of table1 stored in the DN into the shared storage. For example, as shown in FIG. 5, data of shard1 table1, data of shard4 table1, and data of shard7 table1 are written into the shared storage by DN0; data of shard2 table1, data of shard5 table1, and data of shard8 table1 are written into the shared storage by DN1; and data of shard3 table1, data of shard6 tablel, and data of shard9 table1 are written into the shared storage by DN2. The data of shard1 table1 is used as an example. As shown in FIG. 7, the data includes a data segment 1 to a data segment m. For other data structures, refer to FIG. 7. Details are not described herein again.

It should be understood that, in this embodiment of this application, data obtained through further segmentation on data in a shard is referred to as a data segment. There are different names in different systems, for example, micro-partition, SSTFile, and compress unit. This is not specifically limited in this application.

In this embodiment of this application, each data segment has corresponding metadata, and a data amount of the metadata is relatively small. In this case, metadata of a plurality of data segments in one shard may be written into one metadata file. As shown in FIG. 7, metadata of shard1 table1 is used as an example. The metadata includes metadata of the data segment 1 to metadata of the data segment m.

Step 440: Each DN records, in the shared storage, a current CSN number and path information of the currently stored metadata in the shared storage.

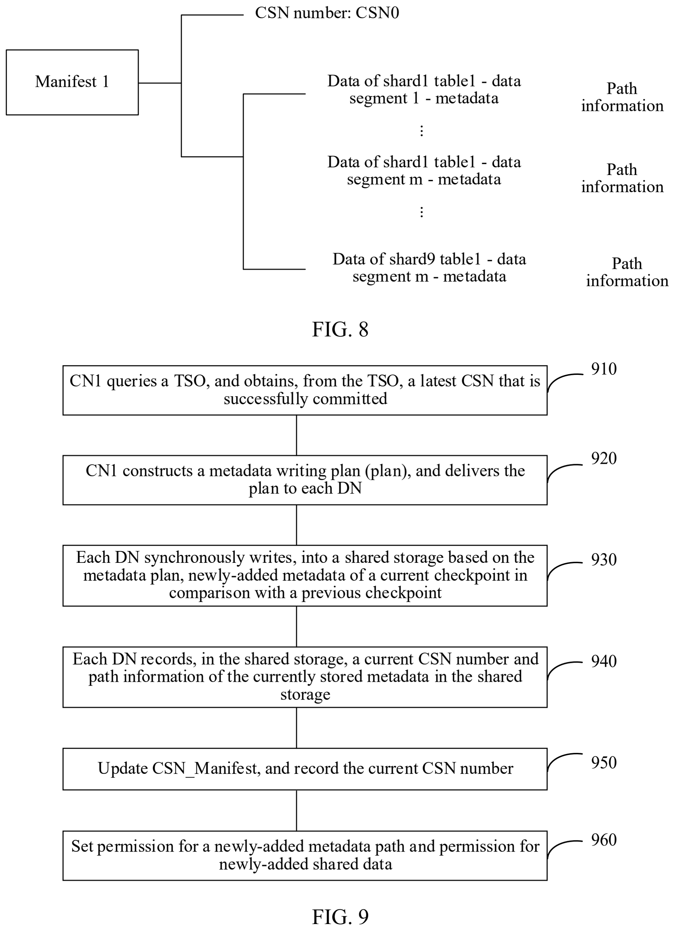

In a possible implementation, as shown in FIG. 8, each DN may write a manifest1 file into the shared storage. The manifest1 file records CSNO and path information of each piece of metadata in the shared storage.

Step 450: Set CSN_Manifest, and record the current CSN number.

In this embodiment of this application, the CSN number recorded in CSN_Manifest is CSNO.

Step 460: Set permission for a metadata path and permission for the shared data.

In this embodiment of this application, a data producer may set permission for the metadata path and permission for the shared data. In this way, only a user who purchases or subscribes to the data can access the data, and a user who does not purchase or subscribe to the data has no permission to access the data.

With reference to FIG. 9 to FIG. 11, an implementation in which a data production cluster stores metadata of shared data into a shared storage is described below in detail by using an incremental checkpoint process as an example. It should be understood that the examples in FIG. 9 to FIG. 11 are merely intended to help a person skilled in the art understand embodiments of this application, but are not intended to limit embodiments of this application to specific values or specific scenarios in the examples in FIG. 9 to FIG. 11. It is clear that a person skilled in the art can make various equivalent modifications or changes based on the following examples provided in FIG. 9 to FIG. 11, and such modifications and changes also fall within the scope of embodiments of this application.

FIG. 9 is a schematic flowchart of another method for storing metadata of shared data by a data production cluster according to an embodiment of this application. As shown in FIG. 9, the method may include step 910 to step 960. Step 910 to step 960 are separately described below in detail.

Step 910: CN1 queries a TSO, and obtains, from the TSO, a latest CSN that is successfully committed.

A method for selecting, by the data production cluster, one CN from a plurality of CNs to perform a metadata storage process is the same as that in step 410. For a specific selection method, refer to the descriptions in step 410. Details are not described herein again.

For example, CN1 performs metadata storage. CN1 triggers a data sharing module. To ensure logical consistency, CN1 needs to interact with a TSO of a system. Specifically, the data sharing module in CN1 queries the TSO for a latest CSN that is successfully committed, for example, CSN1.

Step 920: CN1 constructs a metadata writing plan (plan), and delivers the plan to each DN.

In an example, a full checkpoint is performed initially, and metadata of a checkpoint is written in an incremental manner in a subsequent metadata checkpoint process. Therefore, the metadata writing plan constructed by CN1 indicates each DN to write, into a shared storage, newly-added metadata that is of a current checkpoint in comparison with a previous checkpoint and that is stored in a memory of the DN.

Step 930: Each DN synchronously writes, into the shared storage based on the metadata plan, the newly-added metadata of the current checkpoint in comparison with the previous checkpoint.

In an example, each DN executes the foregoing plan (plan), and identifies, based on the metadata, a data segment that is added or removed in comparison with the previous checkpoint. Comparison may be performed based on a CSN or a previous manifest. This is not specifically limited in embodiments of this application.

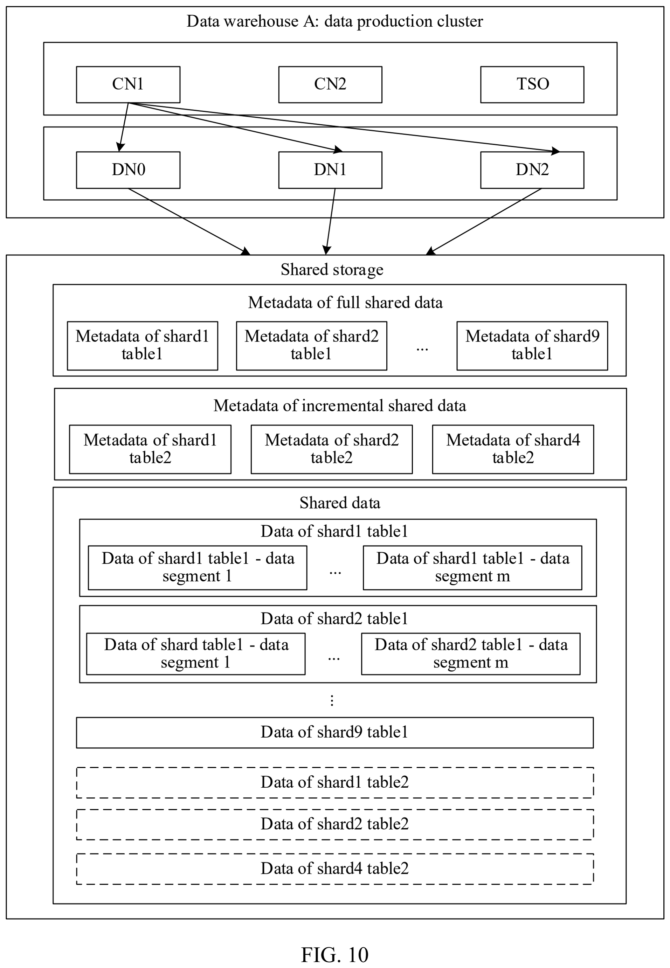

For example, as shown in FIG. 10, newly-added data in the shared storage is data of shard1 table2, data of shard2 table2, and data of shard4 table2. Specifically, the data of shard1 table2 and the data of shard4 table2 are written into the shared storage by DN0, and the data of shard2 table2 is written into the shared storage by DN1.

As shown in FIG. 10, in this embodiment of this application, DN0 may further write, into the shared storage, newly-added metadata corresponding to the data of shard1 table2 (referred to as metadata of shard1 table2) and newly-added metadata corresponding to the data of shard4 table2 (referred to as metadata of shard4 table2), and DN1 writes newly-added metadata corresponding to the data of shard2 table2 (referred to as metadata of shard2 table2). Data of shard1 table4 is used as an example. The data includes a plurality of data segments. Therefore, metadata of shard1 table2 includes metadata of the plurality of data segments.

Step 940: Each DN records, in the shared storage, a current CSN number and path information of the currently stored metadata in the shared storage.

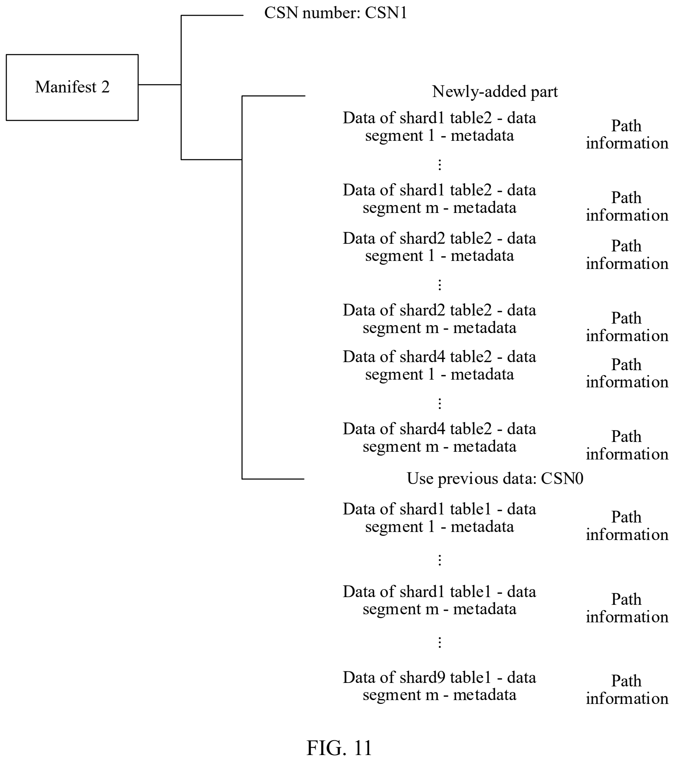

In a possible implementation, no data is newly added to shard2, and in this case, there is no metadata of a shard in a table2_CSN1 path. Because complete data can be read at any checkpoint, the corresponding metatdata and metadata information of CSNO need to be supplemented in a manifest2. Corresponding information in the manifest2 is shown in FIG. 11. The manifest2 records not only CSN1, but also path information of current newly-added metadata in the shared storage and path information that is of each piece of metadata in the shared storage and that is previously recorded in CSNO.

In some embodiments, if a data segment of the current checkpoint is removed in comparison with the previous checkpoint, path information of metadata of to-be-deleted shared data in the shared storage may be further recorded in the manifest2. After a data consumption cluster reads the to-be-deleted shared data from the shared storage, the data production cluster may delete the to-be-deleted shared data and/or the metadata of the to-be-deleted shared data from the shared storage based on the path information of the metadata of the to-be-deleted shared data in the shared storage.

Step 950: Update CSN_Manifest, and record the current CSN number.

In this embodiment of this application, CSN_Manifest is updated, and CSN numbers recorded in CSN Manifest are CSNO and CSN1.

Step 960: Set permission for a newly-added metadata path and permission for newly-added shared data.

In some embodiments, if a data producer wants to cancel a sharing process, only the access permission for the metadata and the shared data needs to be canceled.

It should be noted that the data producer may trigger the incremental checkpoint periodically, or the data producer may actively trigger the incremental checkpoint when querying a transaction. This is not specifically limited in embodiments of this application.

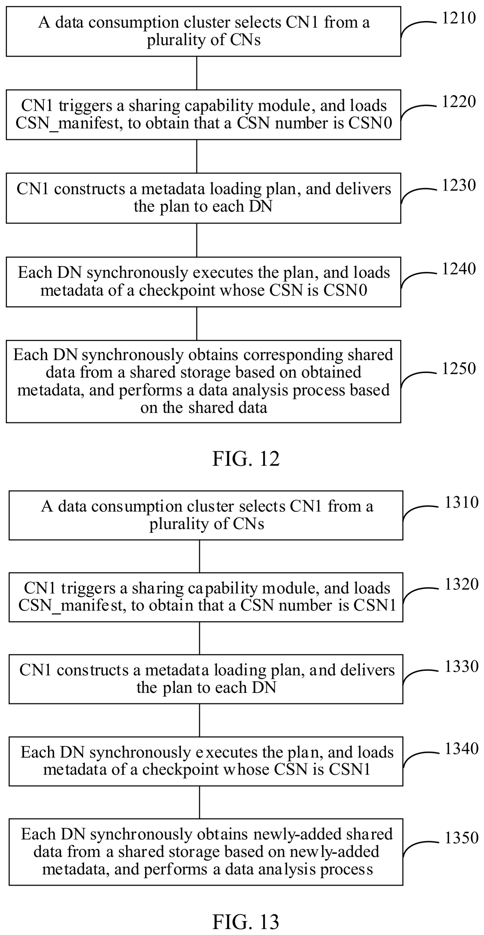

With reference to FIG. 12, an implementation in which a data consumption cluster obtains metadata and shared data corresponding to the metadata from a shared storage is described below in detail by using a full checkpoint process as an example. It should be understood that the example in FIG. 12 is merely intended to help a person skilled in the art understand embodiments of this application, but are not intended to limit embodiments of this application to specific values or specific scenarios in the example in FIG. 12. It is clear that a person skilled in the art can make various equivalent modifications or changes based on the following example provided in FIG. 12, and such modifications and changes also fall within the scope of embodiments of this application.

FIG. 12 is a schematic flowchart of a method for obtaining metadata and shared data corresponding to the metadata from a shared storage by a data consumption cluster according to an embodiment of this application. As shown in FIG. 12, the method may include step 1210 to step 1250. Step 1210 to step 1250 are separately described below in detail.

Step 1210: A data consumption cluster selects CN1 from a plurality of CNs.

A method for selecting one CN from the plurality of CNs by the data consumption cluster is the same as that in step 410. For a specific selection method, refer to the descriptions in step 410. Details are not described herein again. For ease of description, an example in which a CN selected by the data consumption cluster is CN1 is used below for description.

Step 1220: CN1 triggers a sharing capability module, and loads CSN_manifest, to obtain that a CSN number is CSNO.

In an example, CN1 triggers the sharing capability module, and the sharing capability module loads CSN_manifest from a shared storage, to obtain the CSN number recorded in CSN_manifest. In this embodiment, the CSN number recorded in CSN manifest is CSNO.

Step 1230: CN1 constructs a metadata loading plan (plan), and delivers the plan to each DN.

Step 1240: Each DN synchronously executes the plan, and loads metadata of a checkpoint whose CSN is CSNO.

It should be understood that the data consumption cluster and a data production cluster comply with same data distribution. For example, if shared data is distributed in a hash mode, data consumption needs to comply with hash distribution in the consumption cluster. Therefore, each DN synchronously obtains corresponding data from the shared storage based on a correspondence between a DN and a shard shown in FIG. 6.

For example, each DN obtains corresponding metadata based on the path information of each piece of metadata recorded in the manifest1 shown in FIG. 8, and stores the obtained metadata in respective memories.

Step 1250: Each DN synchronously obtains corresponding shared data from the shared storage based on the obtained metadata, and performs a data analysis process based on the shared data.

In this embodiment of this application, each DN synchronously obtains the corresponding shared data from the shared storage based on the obtained metadata. For example, DN0 obtains data of shard1 table1, data of shard4 table1, and data of shard7 table1 from the shared storage based on stored metadata; DN1 obtains data of shard2 tablel, data of shard5 tablel, and data of shard8 table1 from the shared storage based on stored metadata; and DN2 obtains data of shard3 tablel, data of shard6 table1, and data of shard9 table1 from the shared storage based on stored metadata. In addition, data analysis is performed based on the obtained shared data, and a data consumption process is performed.

With reference to FIG. 13, another implementation in which a data consumption cluster obtains metadata and shared data corresponding to the metadata from a shared storage is described below in detail by using an incremental checkpoint process as an example. It should be understood that the example in FIG. 13 is merely intended to help a person skilled in the art understand embodiments of this application, but are not intended to limit embodiments of this application to specific values or specific scenarios in the example in FIG. 13. It is clear that a person skilled in the art can make various equivalent modifications or changes based on the following example provided in FIG. 13, and such modifications and changes also fall within the scope of embodiments of this application.

FIG. 13 is a schematic flowchart of another method for obtaining metadata and shared data corresponding to the metadata from a shared storage by a data consumption cluster according to an embodiment of this application. As shown in FIG. 13, the method may include step 1310 to step 1350. Step 1310 to step 1350 are separately described below in detail.

Step 1310: A data consumption cluster selects CN1 from a plurality of CNs.

Similar to step 410, for a specific selection method, refer to the descriptions in step 410. Details are not described herein again. For ease of description, an example in which a CN selected by the data consumption cluster is CN1 is used below for description.

Step 1320: CN1 triggers a sharing capability module, and loads CSN_manifest, to obtain that a CSN number is CSN1.

Step 1330: CN1 constructs a metadata loading plan (plan), and delivers the plan to each DN.

Step 1340: Each DN synchronously executes the plan, and loads metadata of a checkpoint whose CSN is CSN1.

For example, each DN reads the manifest2 shown in FIG. 11. The manifest2 records path information of currently newly-added metadata in a shared storage and path information that is of each piece of metadata in the shared storage and that is previously recorded in CSNO. Because each piece of metadata previously recorded in CSNO has been stored in a memory of each DN, each DN only needs to obtain the newly-added metadata based on the path information that is of the newly-added metadata and that is recorded in the manifest2 shown in FIG. 11, and store the newly-added metadata in the respective memory.

For example, DN0 obtains, from the shared storage, newly-added metadata corresponding to data of shard1 table2 (referred to as metadata of shard1 table2) and newly-added metadata corresponding to data of shard4 table2 (referred to as metadata of shard4 table2), DN1 obtains, from the shared storage, newly-added metadata corresponding to data of shard2 table2 (referred to as metadata of the shard2 table2), and DN0 and DN1 stores the metadata in respective memories.

In some embodiments, if the manifest2 further records metadata of shared data that needs to be deleted in comparison with that previously recorded in CSNO, a corresponding DN in the data consumption cluster may delete the corresponding metadata from the previous metadata stored in the memory. The data consumption cluster may further write CSNO into the shared storage, so that the data production cluster can determine, based on CSNO written by the data consumption cluster, that the data consumption cluster has read shared data corresponding to CSNO from the shared storage, and the data production cluster can delete, from the shared storage, the shared data and/or the metadata of the shared data that needs to be deleted. In this way, garbage collection is implemented, and storage space of the shared storage is saved.

Step 1350: Each DN synchronously obtains newly-added shared data from the shared storage based on the newly-added metadata, and performs a data analysis process.

In this embodiment of this application, each DN synchronously obtain the newly-added shared data from the shared storage based on the newly-added metadata. For example, DN0 obtains data of shard1 table2 and data of shard4 table2 from the shared storage based on the newly-added metadata, and DN1 obtains data of shard2 table2 from the shared storage based on the newly-added metadata.

It should be noted that the data producer may trigger loading of incremental metadata periodically, or the data producer may actively trigger loading of incremental metadata when querying a transaction. This is not specifically limited in embodiments of this application.

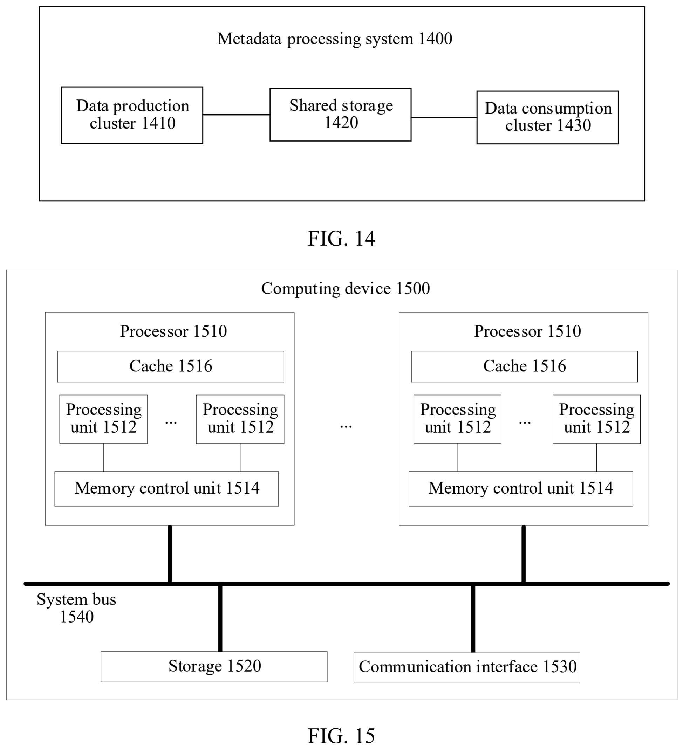

The foregoing describes in detail the method provided in embodiments of this application with reference to FIG. 1 to FIG. 13. Embodiments of a system in this application are described below in detail with reference to FIG. 14 to FIG. 17. It should be understood that descriptions of the method embodiments correspond to descriptions of the system embodiments. Therefore, for a part not described in detail, refer to the foregoing method embodiments.

FIG. 14 is a block diagram of a metadata processing system 1400 according to an embodiment of this application. The system 1400 may be implemented by software, hardware, or a combination of software and hardware. The metadata processing system 1400 provided in this embodiment of this application can implement a method procedure in embodiments of this application. The system 1400 includes a data production cluster 1410, a shared storage 1420, and a data consumption cluster 1430. The data production cluster 1410 is configured to generate metadata of shared data, where the data production cluster includes a plurality of data nodes that provide the shared data. The data production cluster 1410 is further configured to store the shared data and the metadata into the shared storage, where the metadata is used by the data consumption cluster to obtain the shared data from the shared storage, and the data consumption cluster includes a plurality of data nodes that use the shared data. The shared storage 1420 is configured to generate path information of the metadata. The data consumption cluster 1430 is configured to obtain the path information of the metadata from the shared storage. The data consumption cluster 1430 is further configured to obtain the metadata from the shared storage based on the path information of the metadata. The data consumption cluster 1430 is further configured to obtain the shared data from the shared storage based on the metadata.

Optionally, the data production cluster 1410 is further configured to set access permission for the path information of the metadata. The data consumption cluster 1430 is specifically configured to obtain the path information of the metadata by using the access permission.

Optionally, the data production cluster 1410 is specifically configured to: periodically obtain the path information of the metadata from the shared storage; or obtain the path information of the metadata from the shared storage when a target event occurs.

Optionally, the data production cluster 1410 is specifically configured to: store, by the plurality of data nodes in the data production cluster 1410, metadata of respective shared data into the shared storage.

Optionally, the shared storage 1420 is further configured to: after the data consumption cluster 1430 reads the shared data, delete the shared data or the metadata of the shared data.

The system 1400 herein may be embodied in a form of a functional module. The functional module herein may be implemented in a form of software and/or hardware. This is not specifically limited.

For example, the "data node" may be a software program, a hardware circuit, or a combination thereof that implements the foregoing functions. For example, the data node in the data production cluster 1410 is used below as an example to describe an implementation of the data production cluster 1410. Similarly, for example, for implementations of the shared storage 1420 and the data consumption cluster 1430, refer to the implementation of the data production cluster 1410.

The data node may include code run on a computing instance. The computing instance may include at least one of a physical host (a computing device), a virtual machine, and a container. Further, there may be one or more computing instances. For example, the data node may include code run on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed on a same virtual private cloud (virtual private cloud, VPC), or may be distributed on a plurality of VPCs. Generally, one VPC is disposed in one region. A communication gateway needs to be disposed in each VPC for communication between two VPCs in a same region and cross-region communication between VPCs in different regions. The VPCs are interconnected through the communication gateway.

The data node is used as an example of a hardware functional unit, and the data node may include at least one computing device, such as a server. Alternatively, the data node may be a device implemented by using an application-specific integrated circuit (application-specific integrated circuit, ASIC) or a programmable logic device (programmable logic device, PLD), or the like. The PLD may be implemented by using a complex programmable logical device (complex programmable logical device, CPLD), a field programmable gate array (field programmable gate array, FPGA), a generic array logic (generic array logic, GAL), or any combination thereof.

A plurality of computing devices included in the data node may be distributed in a same region, or may be distributed in different regions. The plurality of computing devices included in the data node may be distributed in a same AZ, or may be distributed in different AZs. Similarly, the plurality of computing devices included in the data node may be distributed in a same VPC, or may be distributed in a plurality of VPCs. The plurality of computing devices may be any combination of computing devices such as a server, an ASIC, a PLD, a CPLD, an FPGA, and GAL.

Therefore, the modules in the examples described in embodiments of this application can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In addition, the system embodiments and the method embodiments provided in the foregoing embodiments belong to a same concept. For specific implementation processes of the system embodiments, refer to the method embodiments. Details are not described herein again.

The method provided in embodiments of this application may be performed by a computing device, and the computing device may also be referred to as a computer system, including a hardware layer, an operating system layer running above the hardware layer, and an application layer running above the operating system layer. The hardware layer includes hardware, for example, a processing unit, a memory, and a memory control unit. Subsequently, functions and structures of the hardware are described in detail. The operating system is any one or more computer operating systems through a process (process), for example, a Linux operating system, a Unix operating system, an Android operating system, an iOS operating system, or a Windows operating system, that implement service processing. The application layer includes applications such as a browser, an address book, word-processing software, and instant messaging software. In addition, optionally, the computer system is a handheld device, for example, a smartphone, or a terminal device, for example, a personal computer. This is not particularly limited in this application, provided that the method according to embodiments of this application can be implemented. The method provided in embodiments of this application may be performed by the computing device or a functional module that is in the computing device and that can invoke and execute a program.

A computing device according to an embodiment of this application is described below in detail with reference to FIG. 15.

FIG. 15 is a diagram of an architecture of a computing device 1500 according to an embodiment of this application. The computing device 1500 may be a server, a computer, or another device with a computing capability. The computing device 1500 shown in FIG. 15 includes at least one processor 1510 and a storage 1520.

It should be understood that quantities of processors and storages in the computing device 1500 are not limited in this application.

The processor 1510 executes instructions in the storage 1520, so that the computing device 1500 implements the method provided in this application. Alternatively, the processor 1510 executes the instructions in the storage 1520, so that the computing device 1500 implements the functional modules provided in this application, to implement the method provided in this application.

Optionally, the computing device 1500 further includes a communication interface 1530. The communication interface 1530 uses a transceiver module, for example but not limited to, a network interface card or a transceiver, to implement communication between the computing device 1500 and another device or a communication network.

Optionally, the computing device 1500 further includes a system bus 1540. The processor 1510, the storage 1520, and the communication interface 1530 are separately connected to the system bus 1540. The processor 1510 can access the storage 1520 through the system bus 1540. For example, the processor 1510 can read and write data or execute code in the storage 1520 through the system bus 1540. The system bus 1540 is a peripheral component interconnect express (peripheral component interconnect express, PCI) bus, an extended industry standard architecture (extended industry standard architecture, EISA) bus, or the like. The system bus 1540 is classified into an address bus, a data bus, a control bus, or the like. For ease of representation, only one thick line is used to represent the bus in FIG. 15, but this does not mean that there is only one bus or only one type of bus.

In a possible implementation, a function of the processor 1510 is mainly to interpret instructions (or code) of a computer program and process data in computer software. The instructions of the computer program and the data in the computer software may be stored in the storage 1520 or a cache 1516.

Optionally, the processor 1510 may be an integrated circuit chip and has a signal processing capability. By way of example and not limitation, the processor 1510 is a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware assembly. The general-purpose processor is a microprocessor or the like. For example, the processor 1510 is a central processing unit (central processing unit, CPU).

Optionally, each processor 1510 includes at least one processing unit 1512 and a memory control unit 1514.

Optionally, the processing unit 1512 is also referred to as a core (core) or a kernel, and is the most important component of the processor. The processing unit 1512 is made of monocrystalline silicon through a specific production process. All computation, accept commands, storage commands, and data processing of the processor are executed by the core. The processing unit independently runs program instructions, and increases a running speed of a program by using a parallel computing capability. Various processing units have fixed logical structures. For example, the processing unit includes logical units such as a level 1 cache, a level 2 cache, an execution unit, an instructionlevel unit, and a bus interface.

In an implementation example, the memory control unit 1514 is configured to control data exchange between the storage 1520 and the processing unit 1512. Specifically, the memory control unit 1514 receives a memory access request from the processing unit 1512, and controls access to the memory based on the memory access request. By way of example and not limitation, the memory control unit is a device, for example, a memory management unit (memory management unit, MMU).

In an implementation example, each memory control unit 1514 performs addressing for the storage 1520 through the system bus. In addition, an arbiter (not shown in FIG. 15) is configured in the system bus, and the arbiter is responsible for processing and coordinating contention-based access of a plurality of processing units 1512.

In an implementation example, the processing unit 1512 is in communication connection with the memory control unit 1514 through a connection line inside a chip, for example, an address line, to implement communication between the processing unit 1512 and the memory control unit 1514.

Optionally, each processor 1510 further includes a cache 1516, and the cache is a data exchange buffer (referred to as a cache). When the processing unit 1512 needs to read data, the processing unit 1512 first searches the cache for required data. If the required data is found, the processing unit 1512 directly reads the data. If the required data is not found, the processing unit 1512 searches the storage for the required data. Because the cache runs much faster than the storage, a function of the cache is to help the processing unit 1512 run faster.

The storage 1520 can provide running space for a process in the computing device 1500. For example, the storage 1520 stores a computer program (specifically, code of the program) for generating the process. After the computer program is run by the processor to generate the process, the processor allocates corresponding storage space to the process in the storage 1520. Further, the storage space further includes a text segment, an initialized data segment, an uninitialized data segment, a stack segment, a heap segment, and the like. The storage 1520 stores, in the storage space corresponding to the process, data generated during running of the process, for example, intermediate data or process data.

Optionally, the storage is also referred to as a memory, and a function of the storage is to temporarily store operation data in the processor 1510 and data exchanged with an external storage such as a hard disk drive. Provided that the computer runs, the processor 1510 schedules, to the memory for an operation, data on which the operation needs to be performed, and the processing unit 1512 sends a result after the operation is completed.

By way of example and not limitation, the storage 1520 is a volatile memory or a non-volatile memory, or may include both a volatile memory and a non-volatile memory. The non-volatile memory is a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory is a random access memory (random access memory, RAM) and serves as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the storage 1520 in the system and method described in this specification is intended to include but is not limited to these storages and any storage of another proper type.

The listed structure of the computing device 1500 is merely an example for description, and this application is not limited thereto. The computing device 1500 in this embodiment of this application includes various types of hardware in a computer system in the conventional technology. For example, the computing device 1500 further includes a storage other than the storage 1520, for example, a magnetic disk storage. A person skilled in the art should understand that the computing device 1500 may further include another component required for implementing normal running. In addition, a person skilled in the art should understand that, based on a specific requirement, the computing device 1500 may further include a hardware device implementing another additional function. In addition, a person skilled in the art should understand that the computing device 1500 may alternatively include only a component required for implementing embodiments of this application, and do not necessarily include all the components shown in FIG. 15.

An embodiment of this application further provides a computing device cluster. The computing device cluster includes at least one computing device. The computing device may be a server. In some embodiments, the computing device may alternatively be a terminal device, for example, a desktop computer, a notebook computer, or a smartphone.

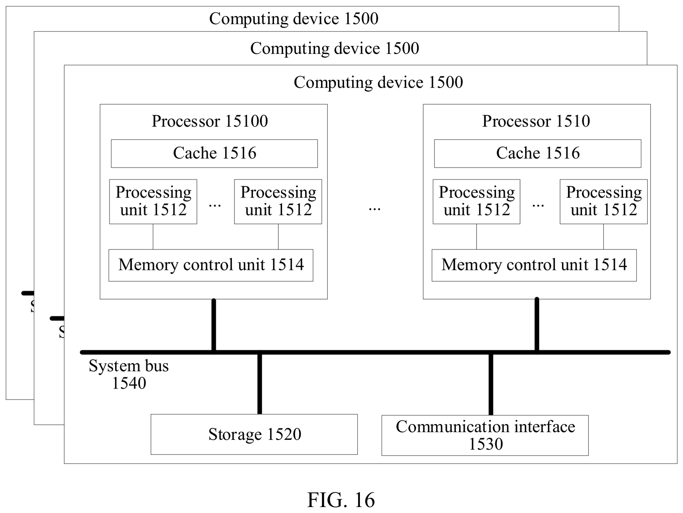

As shown in FIG. 16, the computing device cluster includes at least one computing device 1500. A storage 1520 of one or more computing devices 1500 in the computing device cluster may store same instructions for performing the foregoing method.

In some possible implementations, the storage 1520 of the one or more computing devices 1500 in the computing device cluster may alternatively store some instructions for performing the foregoing method separately. In other words, a combination of the one or more computing devices 1500 may jointly execute the instructions of the foregoing method.

It should be noted that storages 1520 in different computing devices 1500 in the computing device cluster may store different instructions respectively for performing some functions of the foregoing system. In other words, the instructions stored in the storages 1520 in different computing devices 1500 may implement one or more functions of the foregoing system.

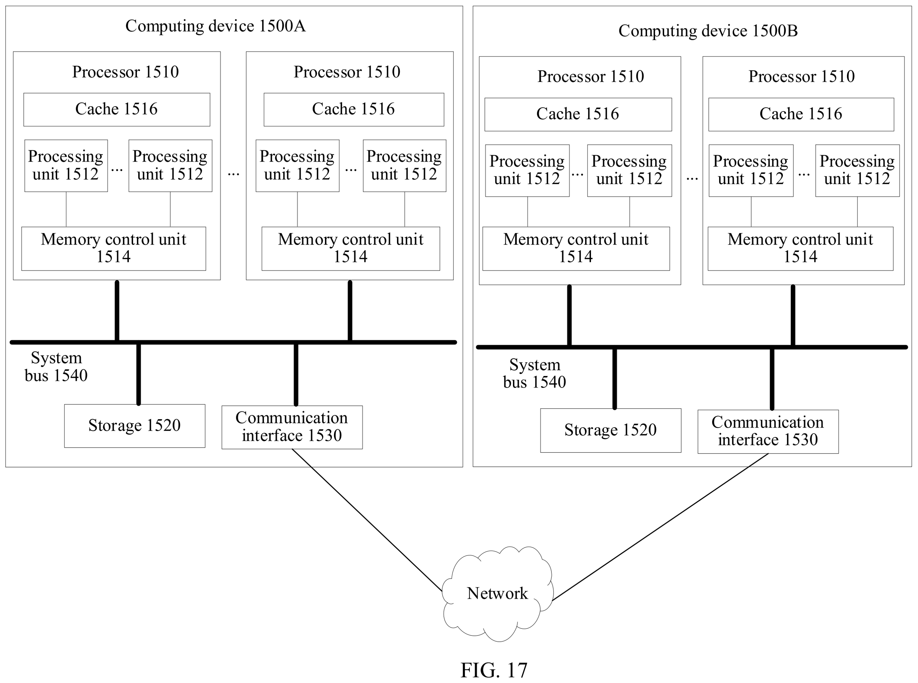

In some possible implementations, the one or more computing devices in the computing device cluster may be connected through a network. The network may be a wide area network, a local area network, or the like. FIG. 17 shows a possible implementation. As shown in FIG. 17, two computing devices 1500A and 1500B are connected through a network. Specifically, each computing device is connected to the network through a communication interface in the computing device.

It should be understood that a function of the computing device 1500A shown in FIG. 17 may alternatively be completed by a plurality of computing devices 1500. Similarly, a function of the computing device 1500B may alternatively be completed by a plurality of computing devices 1500.

In this embodiment, a computer program product including instructions is further provided. The computer program product may be software or a program product that includes the instructions and that can run on a computing device cluster or that can be stored in any usable medium. When the computer program product is run by the computing device cluster, the computing device cluster is enabled to perform the method provided above, or the computing device cluster is enabled to implement a function of the system provided above.

In this embodiment, a computer-readable storage medium is further provided. The computer-readable storage medium may be any usable medium that can be stored by a computing device, or a data storage device such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions. When the instructions in the computer-readable storage medium are executed by a computing device cluster, the computing device cluster is enabled to perform the method provided above.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person skilled in the art may clearly understand that, for the purpose of convenient and brief descriptions, for a detailed working process of the system described above, refer to a corresponding process in the foregoing method embodiments. Details are not described herein again.

In the several embodiments provided in this application, it should be understood that the disclosed system and method may be implemented in other manners. For example, the described system embodiment is merely an example. For example, division into the units is merely logical function division and may be other division in actual implementation. For example, a plurality of units or components may be combined or integrated into another system, or some features may be ignored or not performed.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A metadata processing method, wherein the method comprises:
generating, by a data production cluster, metadata of shared data, wherein the data production cluster comprises a plurality of data nodes that provide the shared data;
storing, by the data production cluster, the shared data and the metadata into a shared storage, wherein the metadata is used by a data consumption cluster to obtain the shared data from the shared storage, and the data consumption cluster comprises a plurality of data nodes that use the shared data;
generating, by the shared storage, path information of the metadata;
obtaining, by the data consumption cluster, the path information of the metadata from the shared storage;
obtaining, by the data consumption cluster, the metadata from the shared storage based on the path information of the metadata; and
obtaining, by the data consumption cluster, the shared data from the shared storage based on the metadata.

2. The method according to claim 1, wherein the method further comprises:
setting, by the data production cluster, access permission for the path information of the metadata; and
obtaining, by the data consumption cluster, the path information of the metadata by using the access permission.

3. The method according to claim 1 or 2, wherein obtaining, by the data consumption cluster, the path information of the metadata from the shared storage comprises:
periodically obtaining, by the data consumption cluster, the path information of the metadata from the shared storage; or
obtaining, by the data consumption cluster, the path information of the metadata from the shared storage when a target event occurs.

4. The method according to any one of claims 1 to 3, wherein storing, by the data production cluster, the metadata into the shared storage comprises:
storing, by the plurality of data nodes in the data production cluster, metadata of respective shared data into the shared storage.

5. The method according to any one of claims 1 to 4, wherein the method further comprises:
after the data consumption cluster reads the shared data, deleting, by the shared storage, the shared data or the metadata of the shared data.

6. A metadata processing system, wherein the system comprises:
a data production cluster, configured to generate metadata of shared data, wherein the data production cluster comprises a plurality of data nodes that provide the shared data; and
the data production cluster is further configured to store the shared data and the metadata into a shared storage, wherein the metadata is used by a data consumption cluster to obtain the shared data from the shared storage, and the data consumption cluster comprises a plurality of data nodes that use the shared data;
the shared storage, configured to generate path information of the metadata; and
the data consumption cluster, configured to obtain the path information of the metadata from the shared storage, wherein
the data consumption cluster is further configured to obtain the metadata from the shared storage based on the path information of the metadata; and
the data consumption cluster is further configured to obtain the shared data from the shared storage based on the metadata.

7. The system according to claim 6, wherein
the data production cluster is further configured to set access permission for the path information of the metadata; and
the data consumption cluster is further configured to obtain the path information of the metadata by using the access permission.

8. The system according to claim 6 or 7, wherein the data consumption cluster is specifically configured to:
periodically obtain the path information of the metadata from the shared storage; or
obtain the path information of the metadata from the shared storage when a target event occurs.

9. The system according to any one of claims 6 to 8, wherein the data production cluster is specifically configured to:
store, by the plurality of data nodes in the data production cluster, metadata of respective shared data into the shared storage.

10. The system according to any one of claims 6 to 9, wherein
the shared storage is further configured to: after the data consumption cluster reads the shared data, delete the shared data or the metadata of the shared data.

11. A computing device cluster, comprising at least one computing device, wherein each computing device comprises a processor and a storage; and
the processor of the at least one computing device is configured to execute instructions stored in the storage of the at least one computing device, to enable the computing device cluster to perform the method according to any one of claims 1 to 5.

12. A computer program product comprising instructions, wherein when the instructions are run by a computing device cluster, the computing device cluster is enabled to perform the method according to any one of claims 1 to 5.

13. A computer-readable storage medium, comprising computer program instructions, wherein when the computer program instructions are executed by a computing device cluster, the computing device cluster performs the method according to any one of claims 1 to 5.
